# EUROPEAN PATENT APPLICATION

(11) **EP 4 806 960 A1**
(43) Date of publication of application: **16.09.2026**
(21) Application number: 26162567.7
(22) Date of filing: 05.03.2026
(51) Int. Cl.: C09D 11/107, C09D 11/326, C09D 11/106, C09D 11/322

(54) **INKJET INK**

(30) Priority: 14.03.2025 JP 2025041320
(71) Applicant: KYOCERA Document Solutions Inc., Osaka-shi, Osaka 540-8585 (JP)
(72) Inventor: OZAWA, Noriaki, Osaka-shi, Osaka, 540-8585 (JP)
(74) Representative: Viering, Jentschura & Partner mbB Patent- und Rechtsanwälte

(57) **Abstract**

An inkjet ink includes: a pigment; a cyclohexylmethacrylate/methacrylic acid block copolymer; styrene acrylic particles having an average particle diameter of 50 nm or more and 100 nm or less; and water. A weight ratio of the cyclohexylmethacrylate/methacrylic acid block copolymer to the pigment is 0.05 or more and 0.1 or less. In the inkjet ink, a content of the styrene acrylic particle is 0.5 mass% or more and 1.5 mass% or less.

## Description

### Field

The present disclosure relates to an inkjet ink.

### Background

In inkjet recording apparatuses, in order to record images on recording media at high speed, it is advantageous to enhance the rubfastness of the image immediately after being recorded on the recording medium. In general, in inkjet inks, it is effective to blend resin particles as a binder to enhance the rubfastness of the image.

### Summary

According to an embodiment of the present disclosure, there is provided an inkjet ink, including: a pigment; a cyclohexylmethacrylate/methacrylic acid block copolymer; styrene acrylic particles having an average particle diameter of 50 nm or more and 100 nm or less; and water.

A weight ratio of the cyclohexylmethacrylate/methacrylic acid block copolymer to the pigment is 0.05 or more and 0.1 or less.

In the inkjet ink, a content of the styrene acrylic particle is 0.5 mass% or more and 1.5 mass% or less.

### Detailed Description

In inkjet inks, generally, blending resin particles as a binder makes a satellite droplet separated from a main droplet more likely to be generated when ejected from a recording head. Therefore, in inkjet inks having low surface tension, for example, defects such as a decrease in image quality due to satellite droplets impacted around the position of the recording medium at which the main droplet impacts on the recording medium are likely to occur.

In view of the circumstances as described above, it is an object of the present disclosure to provide an inkjet ink capable of achieving both rubfastness of the image immediately after recording and a coalesce property during ejection.

An embodiment of the present disclosure will be described.

### [Configuration of ink]

### (Schematic configuration)

An inkjet ink according to an embodiment of the present disclosure (hereinafter, also referred to simply as an "ink") includes: a pigment a, a pigment dispersion resin b, the binder c, and water. The ink according to this embodiment is a water-based ink that is ejected from a recording head of an inkjet recording apparatus onto a recording medium to record an image on the recording medium. The recording medium on which an image is to be recorded by the ink according to this embodiment includes a fiber such as a cellulose fiber. Examples of such a recording medium include plain paper, copy paper, recycled paper, thin paper, and thick paper.

In the ink according to this embodiment, a cyclohexylmethacrylate/methacrylic acid block copolymer is used as the pigment dispersion resin b. In general, in inks, when the pigment dispersion resin is adsorbed on the pigment, the viscosity decreases due to the loss of viscosity of the pigment dispersion resin adsorbed on the pigment. In this regard, in the ink according to this embodiment, the action of cyclohexylmethacrylate forming a hydrophobic segment allows the adsorption of the pigment dispersion resin b on the pigment a to be improved, and thus, low viscosity is achieved. In the ink according to this embodiment, the viscosity decrease by the action of the pigment dispersion resin b allows a property that makes it difficult to generate satellite droplets and is easy to coalesce as one liquid droplet when ejected from a recording head (hereinafter, referred to as a "coalesce property") to be ensured.

Further, in the ink according to this embodiment, fine particles of styrene acrylic particles are used as the binder c. The styrene acrylic particle forming the binder c have an average particle diameter of 50 nm or more and 100 nm or less. In the ink according to this embodiment, the action of the binder c causes the image recorded on the recording medium to dry rapidly. For this reason, in the ink according to this embodiment, high rubfastness of the image immediately after recording can be achieved. In this embodiment, the average particle diameter of the binder c is measured in accordance with ISO 13321:1996 (Particle size analysis-Photon correlation spectroscopy).

Details of each component of the ink according to this embodiment will be described below.

### (Pigment a)

The ink according to this embodiment includes the pigment a as a coloring agent from the viewpoints of color mixing prevention and improvement in water resistance in images recorded on the recording medium. The pigment a may be either an inorganic pigment or an organic pigment. Further, as the pigment a, these may be combined with an extender pigment as necessary.

Specific examples of the inorganic pigment that can be used in the ink according to this embodiment include carbon black and a metal oxide. In particular, in the case of a black ink, carbon black is favorable. Examples of the carbon black include furnace black, thermal lamp black, acetylene black, and channel black.

Specific examples of the organic pigment that can be used in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.

In the ink according to this embodiment, the hue is not particularly limited, and a colored pigment of any of colors such as yellow, magenta, cyan, blue, red, orange, and green can be used. Favorable specific examples of the colored pigment include C.I. Pigment Yellow, C.I. Pigment Red, C.I. Pigment Orange, C.I. Pigment Violet, C.I. Pigment Blue, and C.I. Pigment Green. The ink according to this embodiment can use one or two or more selected from these colored pigments as the pigment a.

In the ink according to this embodiment, the content of the pigment a is favorably 3 mass% or more and 10 mass% or less.

### (Pigment dispersion resin b)

In the ink according to this embodiment, the pigment dispersion resin b is blended as a dispersant that is adsorbed on the surface of the pigment a to enhance the dispersibility of the pigment a in the solvent. In the ink according to this embodiment, fine particles of a cyclohexylmethacrylate/methacrylic acid block copolymer are used as the pigment dispersion resin b. In the pigment dispersion resin b, cyclohexylmethacrylate forms a hydrophobic segment and methacrylic acid forms a hydrophilic segment.

The pigment dispersion resin b loses its inherent viscosity when adsorbed on the pigment a. In the inkjet ink according to this embodiment, the action of cyclohexylmethacrylate forming a hydrophobic segment allows the adsorption of the pigment dispersion resin b on the pigment a to be improved. In particular, in the ink according to this embodiment, by using a cyclohexylmethacrylate/methacrylic acid copolymer forming the dispersion resin b, which has a block sequence, the pigment dispersion resin b is easily adsorbed on the pigment a even in a configuration in which the content of the pigment dispersion resin b is low. As a result, in the ink according to this embodiment, low viscosity as well as high dispersion stability can be achieved. In the ink according to this embodiment, since such an action of the pigment dispersion resin b allows the viscosity to be kept low, a satellite droplet is less likely to be generated and a liquid droplet having a high coalesce property tends to be generated when ejected from a recording head.

Further, in the ink according to this embodiment, in order to sufficiently achieve the effect of the above pigment dispersion resin b, a weight ratio b/a of the pigment dispersion resin b to the pigment a is 0.05 or more. Further, in the ink according to this embodiment, in order to prevent the viscosity from increasing due to the presence of the pigment dispersion resin b that is not adsorbed on the pigment a, the weight ratio b/a of the pigment dispersion resin b to the pigment a is 0.1 or less.

### (Binder c)

Examples of the styrene acrylic particle forming the binder c include a styrene-methyl methacrylate copolymer, a styrene-acrylic acid copolymer, a styrene-ethyl acrylate copolymer, a styrene-butyl acrylate copolymer, and a styrene-methyl acrylate copolymer.

In the ink according to this embodiment, in order to achieve high rubfastness of the image immediately after recording, the content of the binder c is 0.5 mass% or more. Further, in the ink according to this embodiment, in order to achieve a high coalesce property during ejection, the content of the binder c is 1.5 mass% or less.

### (Water)

In the ink according to this embodiment, ion exchanged water, purified water, distilled water, or the like can be used as water. In the ink according to this embodiment, the content of water is favorably 30 mass% or more and 60 mass% or less from the viewpoints of dryness and ejection reliability.

### (Other components)

In the ink according to this embodiment, components other than the above may be blended as necessary. For example, in the ink according to this embodiment, a surfactant may be blended to adjust the surface tension. The surfactant has the effect of enhancing the wettability of the ink on a recording medium and the effect of enhancing the compatibility and dispersion stability of each component included in the ink. Examples of the surfactant blended in the ink according to this embodiment include an anionic surfactant, a cationic surfactant, a non-ionic surfactant, and an amphoteric surfactant. The surfactant is favorably a non-ionic surfactant. The non-ionic surfactant is favorably a surfactant having an acetylene bond, more favorably a surfactant having an acetylene glycol structure or an acetylene alcohol structure.

Further, in the ink according to this embodiment, various additives such as a water-soluble moisturizing agent, a penetrating agent, a dissolution stabilizer, an anti-drying agent, an antioxidant, a viscosity adjustor, a pH adjuster, a neutralizer, and an antifungal agent may be blended as necessary in addition to the surfactant.

### [Example]

As Examples 1 to 4 of the present disclosure, inks were prepared and evaluated. Note that the following Examples are merely examples of the present disclosure, and the configuration of the present disclosure is not limited to those in Examples.

### <Evaluation method>

First, an ink evaluation method common to Examples 1 to 4 will be described. As evaluation of inks according to Examples 1 to 4, rubfastness of the image immediately after recording and a coalesce property during ejection were evaluated.

### ·Method of evaluating rubfastness of image immediately after recording

In the evaluation of rubfastness of the image immediately after recording, an inkjet recording apparatus ("TASKalfa Pro 15000c" manufactured by KYOCERA Document Solutions Inc.) was used as a tester. In the tester, the drive voltage was set such that the amount of ink to be ejected from one recording head was 12 pL. Using the tester, a solid image of 10 cm × 10 cm was formed on a recording medium ("Vitality" manufactured by Xerox Corporation). A different recording medium was slid back and forth five times on the solid image within 15 seconds after forming while being pressed against it with a load of 500 g. The image density of the sliding surface of the different recording medium was measured by a spectrodensitometer (FD-5, manufactured by Konica Minolta, Inc.). The image density obtained by the measurement was used as an evaluation value for rubfastness of the image immediately after recording for each ink. Using the evaluation value for rubfastness of the image immediately after recording in each ink, evaluation was performed in accordance with the following criteria A and B. Inks with the evaluation of A for rubfastness of the image immediately after recording are evaluated to "Pass", and inks with the evaluation of B are evaluated to "Fail".
A (Good): 0.02 or less
B (Poor): exceeding 0.02

### ·Method of evaluating coalesce property during ejection

In the evaluation of a coalesce property during ejection, the length of a splash appearing in the image recorded on the recording medium with each ink was measured. That is, assuming that a splash was formed by satellite droplets, it was determined in each ink that the shorter the length of the splash, the higher the coalesce property, and the longer the length of the splash, the lower the coalesce property. In the measurement of the length of the splash, using an inkjet recording apparatus ("TASKalfa Pro 15000c" manufactured by KYOCERA Document Solutions Inc.), the margins of a recording medium (A4 size paper) were set to 5 mm and a straight line image (dot line) was formed thereon. The length of the splash extending from the dot line in the conveying direction was measured, and the maximum value was used as an evaluation value for the coalesce property. Using the evaluation value for the coalesce property of each ink, evaluation was performed in accordance with the following criteria A and B. Inks with the evaluation of A for a coalesce property are evaluated to "Pass", and inks with the evaluation of B are evaluated to "Fail".
A (Good): 0.2 mm or less
B (Poor): exceeding 0.2 mm

### <Example 1>

### (Preparation of samples 1 to 6)

In Example 1, first, a pigment dispersion liquid including the pigment a dispersed in water was prepared. The pigment dispersion liquid was prepared by blending the pigment a, the pigment dispersion resin b, sodium hydroxide, SURFYNOL 420, and water such that the content shown in Table 1 was achieved.

**(Table 1)**

| Component | Content (mass%) |
|---|---|
| Pigment a | 15 |
| Pigment dispersion resin b | 1.0 |
| Sodium hydroxide | 0~1.0 |
| SURFYNOL 420 | 0.5 |
| Water | Remainder |

As the pigment dispersion resin b, a cyclohexylmethacrylate/methacrylic acid block copolymer (acid value: 220 mg KOH/g) was used. Sodium hydroxide was blended as a neutralizer for neutralizing the pigment dispersion resin b. SURFYNOL 420 was blended as a dispersant for enhancing the dispersibility of the pigment a in the solvent and was a non-ionic surfactant manufactured by Nissin Chemical Co., Ltd. In Example 1, Pigment Blue 15:3 ("LIONOL BLUE FG-7351" manufactured by Toyocolor Co., Ltd.) was used as the pigment a, and ion exchanged water was used as water.

The pigment dispersion liquid was prepared by mixing the above components by wet dispersion using a media-type wet disperser. Examples of the media-type wet disperser include a wet disperser (more specifically, "Nano Grain Mill" manufactured by ASADA IRON WORKS. CO., LTD., "MSC mill" manufactured by NIPPON COKE & ENGINEERING. CO., LTD., "DYNO (registered trademark)-MILL" manufactured by Shinmaru Enterprises Corporation, and the like).

In the wet dispersion using a media-type wet disperser, media (zirconia beads having a diameter of 0.5 mm) were set in a vessel and the ejection rate was controlled to 200 to 600 g/min, thereby adjusting the average particle diameter of the pigment dispersion in which the dispersant has adhered to the pigment a dispersed in water to 90 to 110 nm. For measurement of the particle size distributions of the pigment dispersion, a diluted solution obtained by diluting the pigment dispersion liquid 300 times with ion exchanged water was measured using "Zetasizer Nano" manufactured by Sysmex Corporation.

Next, the ink according to Example 1 was prepared. The ink according to Example 1 was prepared by blending the above pigment dispersion liquid, SURFYNOL 420, a water-soluble moisturizing agent, the binder c, and water such that the content shown in Table 2 was achieved. In Example 1, SURFYNOL 420 was blended to adjust the surface tension of the ink. In Example 1, 3-methyl-1,5-pentanediol was used as the water-soluble moisturizing agent, and a styrene-methyl methacrylate copolymer (an acid value: 20 mg KOH/g, an average particle diameter: determined for each of the samples 1 to 6, a solid content: 50%) was used as the binder c.

**(Table 2)**

| Component | Content (mass%) |
|---|---|
| Pigment dispersion liquid | 53.3 |
| SURFYNOL 420 | 0.7 |
| Water-soluble moisturizing agent | 30 |
| Binder c | 1.0 |
| Water | Remainder |

In the preparation of the ink according to Example 1, the components shown in Table 2 were added in order while stirring the solvent with a stirrer.
Further, each ink after stirring was filtered using a filter having a pore size of φ5 µm to remove foreign substances, dirt, coarse particles, and the like.

### (Evaluation results of samples 1 to 6)

For the samples 1 to 6 according to Example 1, rubfastness of the image immediately after recording and a coalesce property during ejection were evaluated. Table 3 shows the average particle diameter of the binder c and the evaluation results of rubfastness of the image immediately after recording and a coalesce property during ejection for the samples 1 to 6.

**(Table 3)**

| No. | Binder c Particle diameter (nm) | Evaluation results | |
|---|---|---|---|
| | | Rubfastness | Coalesce property |
| 1 | 40 | B | A |
| 2 | 50 | A | A |
| 3 | 70 | A | A |
| 4 | 90 | A | A |
| 5 | 100 | A | A |
| 6 | 105 | A | B |

As shown in Table 3, in all of the samples 2 to 5 in which the average particle diameter of the binder c was 50 nm or more and 100 nm or less, the rubfastness of the image immediately after recording and the coalesce property during ejection were evaluated to "Pass". On the other hand, in the sample 1 in which the average particle diameter of the binder c was less than 50 nm, the rubfastness of the image immediately after recording was evaluated to "Fail". Further, in the sample 6 in which the average particle diameter of the binder c exceeded 100 nm, the coalesce property during ejection was evaluated to "Fail".

### <Example 2>

### (Preparation of samples 7 to 13)

In Example 2, first, a pigment dispersion liquid including the pigment a dispersed in water was prepared. The pigment dispersion liquid was prepared by blending the pigment a, the pigment dispersion resin b, sodium hydroxide, SURFYNOL 420, and water such that the content shown in Table 4 was achieved. Note that the content of the pigment dispersion resin b was determined for each of the samples 7 to 13.

**(Table 4)**

| Component | Content (mass%) |
|---|---|
| Pigment a | 15 |
| Pigment dispersion resin b | Determine for each sample |
| Sodium hydroxide | 0∼1.0 |
| SURFYNOL 420 | 0.5 |
| Water | Remainder |

In the samples 7 to 12, a cyclohexylmethacrylate/methacrylic acid block copolymer (acid value: 220 mg KOH/g) was used as the pigment dispersion resin b. In the sample 13, a cyclohexylmethacrylate/methacrylic acid random copolymer (acid value: 210 mg KOH/g) was used as the pigment dispersion resin b. Sodium hydroxide was blended as a neutralizer for neutralizing the pigment dispersion resin b. SURFYNOL 420 was blended as a dispersant for enhancing the dispersibility of the pigment a in the solvent and was a non-ionic surfactant manufactured by Nissin Chemical Co., Ltd. In Example 2, Pigment Blue 15:3 ("LIONOL BLUE FG-7351" manufactured by Toyocolor Co., Ltd.) was used as the pigment a, and ion exchanged water was used as water. The pigment dispersion liquid was prepared in the same manner as that in Example 1.

Next, the ink according to Example 2 was prepared. The ink according to Example 2 was prepared by blending the above pigment dispersion liquid, SURFYNOL 420, a water-soluble moisturizing agent, the binder c, and water such that the content shown in Table 5 was achieved. In Example 2, SURFYNOL 420 was blended to adjust the surface tension of the ink. In Example 2, 3-methyl-1,5-pentanediol was used as the water-soluble moisturizing agent, and a styrene-methyl methacrylate copolymer (an acid value: 20 mg KOH/g, an average particle diameter: 100 nm, and a solid content: 50%) was used as the binder c.

**(Table 5)**

| Component | Content (mass%) |
|---|---|
| Pigment dispersion liquid | 53.3 |
| SURFYNOL 420 | 0.7 |
| Water-soluble moisturizing agent | 30 |
| Binder c | 1.0 |
| Water | Remainder |

In the preparation of the ink according to Example 2, the components shown in Table 5 were added in order while stirring the solvent with a stirrer. Further, each ink after stirring was filtered using a filter having a pore size of φ5 µm to remove foreign substances, dirt, coarse particles, and the like.

### (Evaluation results of samples 7 to 13)

For the samples 7 to 13 according to Example 2, rubfastness of the image immediately after recording and a coalesce property during ejection were evaluated.
Table 6 shows the weight ratio b/a of the pigment dispersion resin b to the pigment a, the average particle diameter of the binder c, and the evaluation results of rubfastness of the image immediately after recording and a coalesce property during ejection for the samples 7 to 13.

**(Table 6)**

| No. | Weight ratio b/a | Binder c Particle diameter (nm) | Evaluation results | |
|---|---|---|---|---|
| | | | Rubfastness | Coalesce property |
| 7 | 0.02 | 70 | B | A |
| 8 | 0.04 | 65 | B | A |
| 9 | 0.06 | 70 | A | A |
| 10 | 0.08 | 70 | A | A |
| 11 | 0.10 | 70 | A | A |
| 12 | 0.12 | 70 | A | B |
| 13 | 0.04 | 70 | A | B |

As shown in Table 6, in all of the samples 9 to 11 in which the weight ratio b/a of the pigment dispersion resin b to the pigment a was 0.05 or more and 0.1 or less, of the samples 7 to 12, the rubfastness of the image immediately after recording and the coalesce property during ejection were evaluated to "Pass". On the other hand, in the samples 7 and 8 in which the weight ratio b/a of the pigment dispersion resin b to the pigment a was less than 0.05, the rubfastness of the image immediately after recording was evaluated to "Fail". Further, in the sample 12 in which the weight ratio b/a of the pigment dispersion resin b to the pigment a exceeded 0.1, the coalesce property during ejection was evaluated to "Fail". Further, in the sample 13 in which a cyclohexylmethacrylate/methacrylic acid random copolymer was used as the pigment dispersion resin b, the coalesce property during ejection was evaluated to "Fail".

### <Example 3>

### (Preparation of samples 14 to 16)

In Example 3, first, a pigment dispersion liquid including the pigment a dispersed in water was prepared. The pigment dispersion liquid was prepared by blending the pigment a, the pigment dispersion resin b, sodium hydroxide, OLFINE 1010, and water such that the content shown in Table 7 was achieved.

**(Table 7)**

| Component | Content (mass%) |
|---|---|
| Pigment a | 15 |
| Pigment dispersion resin b | 0.8 |
| Sodium hydroxide | 0~1.0 |
| OLFINE E1010 | 0.5 |
| Water | Remainder |

In the sample 14, a cyclohexylmethacrylate (CyMMA)/methacrylic acid (MAA) block copolymer (acid value: 220 mg KOH/g) was used as the pigment dispersion resin b. In the sample 15, a styrene (St)/acrylic acid (AA) copolymer was used as the pigment dispersion resin b. In the sample 16, a benzylmethacrylate (BzMMA)/MAA copolymer was used as the pigment dispersion resin b. Sodium hydroxide was blended as a neutralizer for neutralizing the pigment dispersion resin b. OLFINE 1010 was blended as a dispersant for enhancing the dispersibility of the pigment a in the solvent and was a non-ionic surfactant manufactured by Nissin Chemical Co., Ltd. In Example 3, Pigment Blue 15:3 ("LIONOL BLUE FG-7351" manufactured by Toyocolor Co., Ltd.) was used as the pigment a, and ion exchanged water was used as water. The pigment dispersion liquid was prepared in the same manner as that in Example 1.

Next, the ink according to Example 3 was prepared. The ink according to Example 3 was prepared by blending the above pigment dispersion liquid, SURFYNOL 420, a water-soluble moisturizing agent, the binder c, and water such that the content shown in Table 8 was achieved. In Example 3, SURFYNOL 420 was blended to adjust the surface tension of the ink. In Example 3, 3-methyl-1,5-pentanediol was used as the water-soluble moisturizing agent, and a styrene-methyl methacrylate copolymer (an acid value: 20 mg KOH/g, an average particle diameter: 100 nm, and a solid content: 50%) was used as the binder c.

**(Table 8)**

| Component | Content (mass%) |
|---|---|
| Pigment dispersion liquid | 53.3 |
| SURFYNOL 420 | 0.7 |
| Water-soluble moisturizing agent | 30 |
| Binder c | 0.8 |
| Water | Remainder |

In the preparation of the ink according to Example 3, the components shown in Table 8 were added in order while stirring the solvent with a stirrer. Further, each ink after stirring was filtered using a filter having a pore size of φ5 µm to remove foreign substances, dirt, coarse particles, and the like.

### (Evaluation results of samples 14 to 16)

For the samples 14 to 16 according to Example 3, rubfastness of the image immediately after recording and a coalesce property during ejection were evaluated.
Table 9 shows the type of pigment dispersion resin b and the evaluation results of rubfastness of the image immediately after recording and a coalesce property during ejection for the samples 14 to 16.

**(Table 9)**

| No. | Pigment dispersion resin b Type | Evaluation results | |
|---|---|---|---|
| | | Rubfastness | Coalesce property |
| 14 | CyMMA/MAA | A | A |
| 15 | St/AA | A | B |
| 16 | BzMMA/MAA | A | B |

As shown in Table 9, in the sample 14 in which a cyclohexylmethacrylate/methacrylic acid block copolymer was used as the pigment dispersion resin b, the rubfastness of the image immediately after recording and the coalesce property during ejection were evaluated to "Pass". On the other hand, in all of the samples 15 and 16 in which a copolymer other than the cyclohexylmethacrylate/methacrylic acid block copolymer was used as the pigment dispersion resin b, the coalesce property during ejection was evaluated to "Fail".

### <Example 4>

### (Preparations of samples 17 to 21)

In Example 4, first, a pigment dispersion liquid including the pigment a dispersed in water was prepared. The pigment dispersion liquid was prepared by blending the pigment a, the pigment dispersion resin b, sodium hydroxide, OLFINE 1010, and water such that the content shown in Table 10 was achieved.

**(Table 10)**

| Component | Content (mass%) |
|---|---|
| Pigment a | 15 |
| Pigment dispersion resin b | 0.8 |
| Sodium hydroxide | 0~1.0 |
| OLFINE E1010 | 0.5 |
| Water | Remainder |

As the pigment dispersion resin b, a cyclohexylmethacrylate/methacrylic acid block copolymer (acid value: 220 mg KOH/g) was used. Sodium hydroxide was blended as a neutralizer for neutralizing the pigment dispersion resin b. OLFINE 1010 was blended as a dispersant for enhancing the dispersibility of the pigment a in the solvent and was a non-ionic surfactant manufactured by Nissin Chemical Co., Ltd. In Example 4, Pigment Blue 15:3 ("LIONOL BLUE FG-7351" manufactured by Toyocolor Co., Ltd.) was used as the pigment a, and ion exchanged water was used as water. The pigment dispersion liquid was prepared in the same manner as that in Example 1.

Next, the ink according to Example 4 was prepared. The ink according to Example 4 was prepared by blending the above pigment dispersion liquid, SURFYNOL 420, a water-soluble moisturizing agent, the binder c, and water such that the content shown in Table 11 was achieved. In Example 4, SURFYNOL 420 was blended to adjust the surface tension of the ink. In Example 4, 3-methyl-1,5-pentanediol was used as the water-soluble moisturizing agent, and a styrene-methyl methacrylate copolymer (an acid value: 20 mg KOH/g, an average particle diameter: 100 nm, and a solid content: 50%) was used as the binder c. Note that the content of the binder c was determined for each of the samples 17 to 21.

**(Table 11)**

| Component | Content (mass%) |
|---|---|
| Pigment dispersion liquid | 53.3 |
| SURFYNOL 420 | 0.7 |
| Water-soluble moisturizing agent | 30 |
| Binder c | Determine for each sample |
| Water | Remainder |

In the preparation of the ink according to Example 4, the components shown in Table 11 were added in order while stirring the solvent with a stirrer.
Further, each ink after stirring was filtered using a filter having a pore size of φ5 µm to remove foreign substances, dirt, coarse particles, and the like.

### (Evaluation results of samples 17 to 21)

For the samples 17 to 21 according to Example 4, rubfastness of the image immediately after recording and a coalesce property during ejection were evaluated.
Table 12 shows the content of the binder c and the evaluation results of rubfastness of the image immediately after recording and a coalesce property during ejection for the samples 17 to 21.

**(Table 12)**

| No. | Binder c Content (mass%) | Evaluation results | |
|---|---|---|---|
| | | Rubfastness | Coalesce property |
| 17 | 0.3 | B | A |
| 18 | 0.5 | A | A |
| 19 | 1.0 | A | A |
| 20 | 1.5 | A | A |
| 21 | 1.6 | A | B |

As shown in Table 12, in all of the samples 18 to 20 in which the content of the binder c was 0.5 mass% or more and 1.5 mass% or less, the rubfastness of the image immediately after recording and the coalesce property during ejection were evaluated to "Pass". On the other hand, in the sample 17 in which the content of the binder c was less than 0.5 mass%, the rubfastness of the image immediately after recording was evaluated to "Fail". Further, in the sample 21 in which the content of the binder c exceeded 1.5 mass%, the coalesce property during ejection was evaluated to "Fail".

## Claims

1. An inkjet ink, comprising:
a pigment;
a cyclohexylmethacrylate/methacrylic acid block copolymer;
styrene acrylic particles having an average particle diameter of 50 nm or more and 100 nm or less; and
water,
a weight ratio of the cyclohexylmethacrylate/methacrylic acid block copolymer to the pigment being 0.05 or more and 0.1 or less,
a content of the styrene acrylic particles being 0.5 mass% or more and 1.5 mass% or less.
